# EUROPÄISCHE PATENTANMELDUNG

(11) **EP 0 632 607 A1**
(43) Veröffentlichungstag der Anmeldung: **04.01.1995**
(21) Anmeldenummer: 94109662.0
(22) Anmeldetag: 22.06.1994
(51) Int. Cl.: H04B 10/08

(54) **Automatische Laserabschaltung mit Schutz gegen unbeabsichtigte Wiedereinschaltung**

(30) Priorität: 29.06.1993 DE 4321601
(71) Anmelder: SIEMENS AKTIENGESELLSCHAFT, D-80333 München (DE)
(72) Erfinder: Vosskämper, Jürgen, Dipl.-Ing., D-81476 München (DE)

(57) **Zusammenfassung**

Zum Schutz des Bedienpersonals wird bei von einem Laser gespeisten optischen Übertragungsstrecken eine automatische Laserabschaltung - ALS - vorgesehen, die durch Überwachungsschaltungen aktiviert werden kann. Für Meßzwecke ist zusätzlich eine Einschaltmöglichkeit für den Lasersender notwendig, auch wenn die ALS-Funktion aktiv ist. Diese Wiedereinschaltung darf aber nicht, durch Fehler verursacht, unabsichtlich geschehen. Deshalb werden erfindungsgemäß die Überwachungsschaltungen zusammen mit einem von einem Baugruppenrechner regelmäßig aufzuziehenden Timer ausgangsseitig über einen Verknüpfungsschaltung abgeschlossen, die den eigentlichen Einschaltbefehl für den Lasersender erzeugt.

## Beschreibung

Die Erfindung betrifft ein Verfahren entsprechend dem Oberbegriff des Anspruchs 1 und einer Anordnung zu dessen Durchführung.

In modernen Übertragungsstrecken für digitale optische Signale werden zur Überbrückung größerer Entfernungen ohne Zwischenregenerierung leistungsfähige Laserdioden eingesetzt, deren Licht bei Bruch des zur Übertragung verwendeten Lichtwellenleiters das Bedienpersonal schädigen kann. Es ist deshalb üblich, für derartige Übertragungsstrecken die Funktion der automatischen Laserabschaltung, im folgenden als ALS bezeichnet, vorzusehen, durch die bei Ausfall der Übertragungsstrecke der jeweilige Lasersender abgeschaltet wird. Bei unidirektionalem Betrieb eines Lichtwellenleiters wird der Übertragungsausfall durch Ausfall des Übertragungssignales in der empfangenden Gegenstelle festgestellt und von dieser eine entsprechende Meldung an eine in der sendenden Stelle enthaltene Überwachungseinrichtung abgegeben. Beim bidirektionalen Betrieb auf einem Lichtwellenleiter wird in das Übertragungssignal zur Kennzeichnung der Übertragungsrichtung eine charakteristische Bitfolge, das sogenannte Richtungsbyte eingesetzt. Damit kann bei Bruch der Übertragungsstrecke und entsprechender Hochregelung des stationseigenen Empfangsverstärkers dennoch durch Auswertung des Richtungsbytes erkannt werden, daß ein Übertragungssignal nur vorgetäuscht wird und das optische Empfangssignal durch Rückstreuung verursacht vom eigenen Sender stammen muß. Im Zusammenhang mit der Behebung derartiger Übertragungsausfälle ist es notwendig, daß trotz ausgelöster ALS-Funktion für Meß- und Erprobungszwecke der Lasersender eingeschaltet werden muß. Dabei muß ein zyklischer Start-Stop-Betrieb mit einer Dauer von etwa 2 s und einer Periode von etwa 70 s ebenso möglich sein wie eine einmalige manuelle Einschaltung des Lasersenders für 2 s oder für etwa 60 s. Die Steuereinrichtung ist nun so auszulegen, daß eine derartige Einschaltung möglich ist, dieser Fall aber nicht durch einen Fehler in der Steuereinrichtung und/oder den angeschlossenen Rechner vorgetäuscht werden kann.

Die Aufgabe bei der vorliegenden Erfindung besteht also darin, das eingangs erwähnte Verfahren der automatischen Laserabschaltung so weiterzuentwickeln, daß ein möglichst hoher Schutz gegen unbeabsichtigte Wiedereinschaltung des Lasersenders vorhanden ist. Erfindungsgemäß wird die Aufgabe dadurch gelöst, daß das eingangs erwähnte Verfahren zur automatischen Laserabschaltung durch die im Kennzeichen des Patentanspruchs 1 angegebenen Merkmale ausgebildet ist. Von besonderem Vorteil beim erfindungsgemäßen Verfahren ist der trotz Berücksichtigung aller möglichen Fehlerquellen vergleichsweise geringe Aufwand zur Durchführung des Verfahrens, da die erfindungsgemäßen Maßnahmen im wesentlichen in einer anwenderspezifischen integrierten Schaltung realisiert werden können.

In den Patentansprüchen 2 bis 9 sind bevorzugte Ausbildungen des erfindungsgemäßen Verfahrens sowie eine Anordnung zu dessen Ausführung näher beschrieben.

Die Erfindung soll im folgenden anhand eines in der Zeichnung dargestellten Ausführungsbeispiels näher erläutert werden. Dabei zeigt:
- Figur 1: eine Anordnung zur ALS-Steuerung und
- Figur 2: eine den Verfahrensablauf in der Anordnung nach Fig. 1 kennzeichnende Wahrheitstabelle.

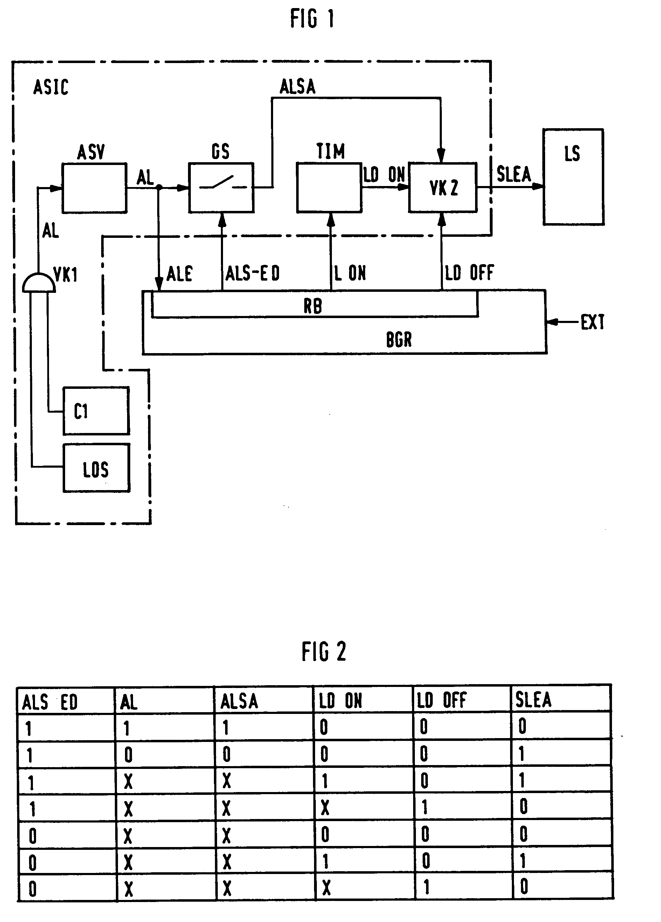

Die in der Figur 1 dargestellte Anordnung enthält als zentrales Steuerungselement einen Baugruppenrechner BGR, der über einen Rechnerbus RB mit einer anwenderspezifischen integrierten Schaltung ASIC kommuniziert. Die integrierte Schaltung ASIC enthält die Fehlererkennungschaltungen LOS zur Erkennung eines vollständigen Ausfalls des Übertragungssignals und die Richtungsbyteauswertung C1, durch die im bidirektionalen Betrieb auf einer Glasfaser eine Unterscheidung zwischen einem von der Gegenstelle stammenden echten Übertragungssignal und einem durch Rückstreuung verursachten Empfangssignal, das von der eigenen Laserdiode stammt, möglich ist. Die Ausgangsignale beider Erkennungsschaltungen werden in einer ersten Verknüpfungsschaltung VK1 miteinander verknüpft und ein Alarmsignal AL gebildet, das einer Verzögerungsschaltung ASV zugeführt wird. Die Verzögerungsschaltung ASV hat eine Verzögerung von etwa 0,5 s, die nur beim Abschalten wirksam wird und verhindert, daß durch kurzzeitige Bitfehler, beispielsweise bei der einmaligen Erkennung des stationseigenen Richtungsbytes bereits eine automatische Laserabschaltung eingeleitet wird. Das Alarmsignal gelangt anschließend zum Eingangsanschluß eines gesteuerten Schalters GS sowie zu einem Alarmeingang ALE des Rechnerbuses.

Der gesteuerte Schalter GS dient zum rechnergesteuerten Ein- bzw. Ausschalten der ALS-Funktion, indem vom Baugruppenrechner BGR ggf. nach einem von einem externen Anschluß EXT erhaltenen Steuerbefehl über den Rechnerbus RB und einen Anschluß ALS-ED der Steuereingang des gesteuerten Schalters GS einem entsprechenden Schaltbefehl erhält, durch den entweder das Alarmsignal AL zu einer zweiten Verknüpfungsschaltung VK2 weitergeleitet und damit die ALS-Funktion eingeschaltet oder indem diese Verbindung aufgetrennt wird.

Mit einem weiteren Eingangsanschluß der zweiten Verknüpfungsschaltung VK2 ist der Ausgangsanschluß eines Timers TIM verbunden, der nur im Falle der Wiedereinschaltung des Lasersenders nach einer automatischen Laserabschaltung über einen Anschluß LON vom Rechnerbus RB mit einer Periode von etwa 2 s Startsignale erhält und bei gleichmäßigem Empfang ein Ausgangssignal erzeugt, daß von der zweiten Verknüpfungsschaltung VK2 als Einschalt- oder Haltebefehl für den Lasersender gewertet wird. Mit einem dritten Eingangsanschluß der zweiten Verknüpfungsschaltung VK2 ist ein Anschluß LDOFF des Rechnerbuses RB verbunden, über den vom Baugruppenrechner ein allen anderen Schaltbefehlen übergeordneter Befehl zum Abschalten des Lasersenders LS abgegeben wird. Von der zweiten Verknüpfungsschaltung VK2 wird an deren Ausgang das eigentliche Einschaltsignal SLEA an den Lasersender LS abgegeben.

Das Betriebsverfahren für die Anordnung nach Figur 1 soll mit Hilfe der in Figur 2 dargestellten Wahrheitstabelle weiter erläutert werden. Die mit ALS-ED bezeichnet erste Spalte der Wahrheitstabelle gibt die Stellung des gesteuerten Schalters ES der Figur 1 wieder, die Schaltstellung 1 bedeutet dabei geschlossenen Schalter, also eingeschaltete ALS-Funktion. In der zweiten Spalte ist der logische Zustand des Alarmsignals AL wiedergegeben, beim logischen Zustand 1 hat eine der Erkennungsschaltungen C1, LOS der Figur 1 ein Alarmsignal erzeugt, beim logischen Zustand 0 liegt ungestörter Betrieb vor, während "x" einen beliebigen logischen Zustand wiedergibt. In der Spalte ALSA ist der logische Zustand des Ausgangssignals ALSA des gesteuerten Schalters GS wiedergegeben, der bei eingeschaltetem gesteuerten Schalter GS dem logischen Zustand des Alarmsignals AL entspricht. In der Spalte LDON ist das gegenüber dem Ausgangssignal ALSA des gesteuerten Schalters GS mit Vorrang wirksame Ausgangssignal des Timers TIM dargestellt, das von den über den Anschluß LON an den Timer abgegebenen Schaltbefehlen des Baugruppenrechners BGR abhängt. Gehen diese Befehle für den Fall der beabsichtigten Wiedereinschaltung des Lasersenders regelmäßig ein, wird ein Dauersignal entsprechend dem logischen 1-Pegel an die zweite Verknüpfungsschaltung VK2 abgegeben, unterbleibt dieses "Aufziehen", so wird spätestens nach 2 s das Dauersignal und damit der Lasersender LS abgeschaltet, da dann die vorher durchgeführte automatische Laserabschaltung durch das ALSA-Signal wieder wirksam wird. In der Spalte LDOFF ist der logische Pegel für das gegenüber allen anderen Eingangssignalen der zweiten Verknüpfungsschaltung mit Vorrang wirksame Signal dargestellt, das beispielsweise durch eine externe Auslösung vom Baugruppenrechner BGR über den Rechnerbus RB an die zweite Verknüpfungsschaltung VK2 zur Schnellabschaltung des Lasersenders abgegeben wird, beim logischen 1-Pegel erfolgt die Abschaltung des Lasers.

In der Spalte SLEA ist das Ausgangssignal der zweiten Verknüpfungsschaltung VK2 dargestellt, der logische 1-Pegel bedeutet dabei, daß der Lasersender LS eingeschaltet wird oder eingeschaltet ist. Der Normalbetrieb bei aktiver, aber nicht ausgelöster ALS-Funktion entspricht dabei der zweiten Zeile von oben und der Normalbetrieb bei ausgeschalteter ALS-Funktion der zweiten Zeile von unten.

Die Wahrheitstabelle nach der Figur 2 gibt das Zusammenwirken zwischen den Erkennungsschaltungen C1, LOS und dem Baugruppenrechner BGR wieder, der über die Haltebefehle LON den Timer periodisch neu aufzieht. Zur Sicherung gegen unbeabsichtigte Wiedereinschaltung durch Rechnerfehler ist die Erzeugung der Haltebefehle LON deshalb in zwei Prozesse A, B aufgeteilt, beide Prozesse liefern ein Ergebnis, das jeweils in einem zusätzlichen Register der anwenderspezifischen integrierten Schaltung ASIC oder im Baugruppenrechner abgelegt wird. Die beiden Prozesse A, B sind so gestaltet, daß deren Ergebnisse bei korrektem Prozeßablauf durch eine spezielle Rechenvorschrift ineinander überführbar sind. Als Rechenvorschrift kann dabei im einfachsten Falle das Komplement gewählt werden, so daß das Ergebnis des Prozesses A das Komplement des Ergebnisses des Prozesses B sein muß. Nur wenn diese Vorschrift erfüllt ist, wird ein Einschalt- und Haltebefehl LON erzeugt, der den Timer TIM neu aufzieht. Die Prozesse A und B sind dabei derart gestaltet, daß bei jedem Rechnerdurchlauf von einem anderen Anfangswert ausgegangen wird und damit rein numerisch quasi zufällig ein anderes Ergebnis entstehen muß. Dadurch ist sichergestellt, daß nicht durch "Hängenbleiben" des Rechners in bestimmten logischen Zuständen eine korrekte logische Funktion vorgetäuscht wird.

In der ersten Spalte der Figur 2 ist mit dem logischen Zustand 0 des Befehlssignals ALS-ED auch der Fall berücksichtigt, daß die ALS-Funktion und damit der gesteuerte Schalter GS ausgeschaltet sind und keinen Einfluß auf die Erzeugung des Steuersignals SLEA für den Lasersender LS haben. In diesem Falle kann über das Haltesignal LON der Timer und damit das Signal LDON auf den logischen 1-Pegel geschaltet werden, so daß dadurch über die zweite Verknüpfungsschaltung VK2 der Lasersender eingeschaltet werden kann. Diese Betriebsart wird in der Regel für Meßzwecke verwendet oder wenn die ALS-Funktion bzw. im Low-Power-Betrieb abgeschaltet ist, der Einfachheit halber ist dann der Timer TIM auf eine zweite Haltezeit von etwa einer Minute umgeschaltet. Dies hat den Vorteil, daß ein kurzzeitiger Ausfall im Baugruppenrechner BGR bzw. im Rechnerbus RB nicht zum sofortigen Abschalten des Lasersenders führt. Entsprechend der Spalte LDOFF kann aber im Gefahrenfall durch Anlegen eines logischen 1-Impulses am entsprechenden Eingang der zweiten Verknüpfungsschaltung VK2 auch dann der Lasersender sofort abgeschalten werden.

## Patentansprüche

1. Verfahren zur automatischen Laserabschaltung in einer, einen Lasersender enthaltenden Übertragungsstrecke für digitale Signale, bei dem als Folge eines Übertragungsausfalls der jeweilige Lasersender dadurch abgeschaltet wird, daß die den Übertragungsausfall erkennenden Überwachungseinrichtungen ein entsprechendes Alarmsignal an eine Einschaltvorrichtung abgeben, die daraufhin ein Abschaltsignal für den angeschlossenen Lasersender erzeugt,
**dadurch gekennzeichnet,**
daß nach einer derartigen automatischen Laserabschaltung zur absichtlichen Wiedereinschaltung des Lasersenders auf ein externes Signal hin für die Dauer der Wiedereinschaltung Einschaltbefehle (LON) von einem die Einschaltung steuernden Baugruppenrechner (BGR) periodisch jeweils innerhalb einer ersten Haltezeit (T1) eines Timers (TIM) an diesen abgegeben werden, daß der Timer (TIM) für die Dauer des ungestörten Empfangs der Einschaltbefehle (LON) einen Steuerbefehl (LDON) an eine als Einschaltvorrichtung wirksame zweite Verknüpfungsschaltung (VK2) abgibt, die daraufhin ein Einschalt- und Haltesignal (SLEA) an den Lasersender (LS) abgibt.

2. Verfahren nach Anspruch 1,
**dadurch gekennzeichnet,**
daß die Einschaltbefehle (LON) dadurch erzeugt werden, daß parallel in zwei voneinander unabhängigen Prozessen (A, B) jeweils aus den Ausgangssignalen (AL) der Überwachungseinrichtungen (C1, LOS) und den den Einschaltzustand der automatischen Laserabschaltung kennzeichnenden Signalen Prozeßsignale erzeugt werden, die nach Verknüpfung miteinander einen vorher festgelegten Wert ergeben müssen, damit Einschaltbefehle (LON) erzeugt werden.

3. Verfahren nach Anspruch 2,
**dadurch gekennzeichnet,**
daß die Prozeßsignale als digitale Größen bei korrekter Erzeugung zueinander komplementäre Werte aufweisen.

4. Verfahren nach Anspruch 1 oder 2,
**dadurch gekennzeichnet,**
daß die Einschalt- und die Abschaltbefehle (LON, LDOFF) zusätzlich gegen Bedienungs- und Rechnerfehler dadurch geschützt werden, daß diesen Befehlen ein Codewort vorangestellt wird, dessen Erzeugung unabhängig von der der Ein- und Abschaltbefehl erfolgt, so daß die zufällige gleichzeitige Erzeugung dieser Kombination und damit ein entsprechender Fehlerfall wenig wahrscheinlich ist.

5. Verfahren nach Anspruch 1,
**dadurch gekennzeichnet,**
daß die erste Haltezeit (T1) ein Dauer von etwa 2 s hat.

6. Verfahren nach Anspruch 1,
**dadurch gekennzeichnet,**
daß bei ausgeschalteter automatischer Laserabschaltung der Timer (TIM) auf eine zweite Haltezeit (T2) umgeschaltet wird.

7. Verfahren nach Anspruch 6,
**dadurch gekennzeichnet,**
daß die Dauer der zweiten Haltezeit etwa 60 s beträgt.

8. Anordnung zur Durchführung eines Verfahrens entsprechend den Ansprüchen 1 bis 7,
**dadurch gekennzeichnet,**
daß eine erste Erkennungsschaltung (LOS) für unidirektionalen Streckenbetrieb vorgesehen ist, die bei fehlendem Empfangssignal ein erstes Fehlersignal erzeugt, daß eine zweite Überwachungsschaltung (C1) für bidirektionalen Streckenbetrieb auf einer Glasfaser vorgesehen ist, die bei Empfang des Richtungsbytes des stationseigenen Lasersenders ein zweites Fehlersignal abgibt, daß mit den Ausgängen der Erkennungsschaltungen (LOS, C1) die Eingänge einer ersten Verknüpfungsschaltung (VK1) verbunden sind, daß der Ausgang der ersten Verknüpfungsschaltung mit einem, einem Baugruppenrechner (BGR) zugeordneten Rechnerbus (RB) und mit dem Signaleingang eines gesteuerten Schalters (GS) verbunden ist, daß der Steuereingang des gesteuerten Schalters mit dem Rechnerbus und der Signalausgang des gesteuerten Schalters mit einem Eingang einer zweiten Verknüpfungsschaltung (VK2) verbunden ist, daß ein weiterer Eingang der zweiten Verknüpfungsschaltung (VK2) zur sofortigen Laserabschaltung mit dem Rechnerbus (RB) und ein dritter Eingang mit dem Ausgang eines Timers (TIM) verbunden ist, dessen Steuereingang an den Rechnerbus (RB) angeschlossen ist, daß der Ausgang der zweiten Verknüpfungsschaltung (VK2) mit einem Steuereingang des Lasersenders (LS) verbunden ist und der Baugruppenrechner (BGR) einen Befehlseingang für externe Befehlsquellen (EXT) aufweist.

9. Anordnung nach Anspruch 8,
**dadurch gekennzeichnet,**
daß der ersten Verknüpfungsschaltung (VK1) unmittelbar ein Verzögerungsglied (ASV) mit einer Abschaltverzögerung von etwa 0,5 s nachgeschaltet ist.
